# EUROPÄISCHE PATENTSCHRIFT

(11) **EP 0 623 638 B1**
(45) Veröffentlichungstag und Bekanntmachung des Hinweises auf die Patenterteilung: **26.06.2002**
(21) Anmeldenummer: 94106565.8
(22) Anmeldetag: 27.04.1994
(51) Int. Cl.: C08G 75/18

(54) **Oxidierte Polyarylensulfide**
Oxidized poly(arylene sulfide)
Sulfure de polyarylène oxidé

(30) Priorität: 04.05.1993 DE 4314735
(43) Veröffentlichungstag der Anmeldung: 09.11.1994
(73) Patentinhaber: Ticona GmbH, 65451 Kelsterbach (DE)
(72) Erfinder: Fleischer, Dietrich, Dr., D-64287 Darmstadt (DE); Strutz, Heinz, Dr., D-61250 Usingen (DE); Kulpe, Jürgen, Dr., D-65929 Frankfurt (DE); Schleicher, Andreas, Dr., D-64683 Einhausen (DE)

(56) Entgegenhaltungen:
- EP-A- 0 091 088
- WO-A-91/18041
- US-A- 3 303 087
- US-A- 3 326 865
- US-A- 3 948 865
- JOURNAL OF POLYMER SCIENCE, POLYMER LETTERS EDITION Bd. 9, Nr. 2 , Februar 1971 , NEW YORK US Seiten 91 - 94 TOMATSU FUJISAWA ET ALL. 'SELECTIVE OXIDATION OF POLY(P-PHENOXYPHENYLSULFIDE) TO A POLYSULFOXIDE'
- KOBUNSHI RONBUNSHU (JAPANESE POLYMER SCIENCE AND TECHNOLOGY) Bd. 37, Nr. 6 , Juni 1980 , TOKYO JP Seite 448 YOSHIO IMAI ET ALL. 'SYNTHESES OF POLYSULFOXIDES AND POLYSULFONES BY SELECTIVE OXIDATION OF ALIPHATIC POLYSULFIDES'

## Beschreibung

Die Erfindung betrifft Polyarylensulfid/sulfoxide und Polyarylensulfoxide, die ein definiertes Schwefel/Sauerstoffverhältnis aufweisen.

Polyarylensulfide sind seit geraumer Zeit bekannt. Aufgrund ihrer hohen Wärmeformbeständigkeit und guten Chemikalienresistenz werden diese Polymere für hochbeanspruchte Bauteile herangezogen. Bei einigen Anwendungen werden jedoch höhere Materialanforderungen gestellt. Speziell ist häufig eine Anhebung der Glastemperatur der Polymeren wünschenswert. Dies soll erreicht werden durch eine polymeranaloge Oxidation von Polyphenylensulfid zu Polyphenylensulfoxid in Essigsäure mit konzentrierter Salpetersäure während 24 Stunden bei 0 bis +5 °C (US 3,303,007). Die angeführten Eigenschaftswerte für das gebildete Polymer deuten jedoch darauf hin, daß kein Polymeres mit einem Schwefel/Sauerstoff-Verhältnis von 1 zu 1 erhalten wurde, da die Werte für die Wärmeformbeständigkeit nicht erhöht waren. Unter "polymeranalog" ist die Umwandlung eines Polymeren in ein anderes zu verstehen.

Die Umsetzung von Polyphenylensulfid suspendiert in Essigsäureanhydrid unter Verwendung von 70%iger Salpetersäure ist ebenfalls bekannt (US 3,303,087 und US 3,326,865). Allerdings bestehen bei diesen Verfahren die Möglichkeiten einer elektrophilen Addition und des aciden Angriffs der starken mineralischen Säure an der Thioetherbindung bei langen Reaktionszeiten. Der acide Angriff führt zu einem Kettenabbau. Weiter hat auch die lange Reaktionszeit einen negativen Einfluß auf das Molekulargewicht.

Aufgabe der Erfindung ist es, ein Verfahren zur Herstellung von Oxidationsprodukten von Polyarylensulfiden zu entwickeln, wobei die Produkte ein definiertes Schwefel/Sauerstoffverhältnis aufweisen sollen und die aus dem Stand der Technik bekannten Nebenreaktionen vermieden werden sollen.

Die Erfindung betrifft ein Verfahren zur Herstellung von Oxidationsprodukten von Polyarylensulfiden mit wiederkehrenden Einheiten der Formel 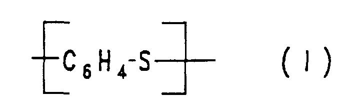 bei dem eine Verbindung mit wiederkehrenden Einheiten der Formel 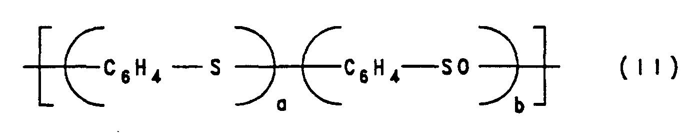 erhalten wird, in der das Schwefel/Sauerstoffverhältnis 1 : 0,1 bis 1 : 1 beträgt, wobei die Summe von a und b stets 1 ist, mit der Maßgabe, daß a Null ist, wenn b 1 ist.

Die Oxidation von polymeren Arylensulfiden mit Ozon führt bei hoher Selektivität zur Bildung von Polyarylensulfoxiden. Dies ist um so mehr überraschend, als Ozon ein extrem starkes Oxidationsmittel ist. Durch entsprechenden Einsatz der Menge an Ozon ist es möglich, entweder die Schwefelbindung vollständig in die Sulfoxidbindung zu überführen oder jedes beliebige S/O-Verhältnis in der Polymerkette zu erzielen. Dabei hat die Wahl des eingesetzten Suspensionsmittels entscheidenden Einfluß.

Verwendbare Polymere der Formel (I) sind im allgemeinen 1,4-verknüpfte Polyarylensulfide, die bis zu einem Anteil von 30 Mol-% eine 1,2- und/oder 1,3-Verknüpfung am aromatischen Kern aufweisen können.

Bevorzugt ist Polyphenylensulfid (PPS), dessen Herstellungsprozess z. B. in den US-Patenten 3,354,129, 3,919,177, 4,038,262 und 4,282,347 beschrieben ist.

Für die Erfindung sind im allgemeinen Polymere geeignet, die ein mittleres Molekulargewicht von 4 000 bis 200 000, vorzugsweise von 10 000 bis 150 000, insbesondere 25 000 bis 100 000, bestimmt durch GPC, aufweisen.

Die Teilchengröße der eingesetzten Polymere liegt im allgemeinen im Bereich von 5×10⁻⁶ bis 500×10⁻⁶ m, vorzugsweise 10×10⁻⁶ bis 300×10⁻⁶ m und insbesondere 10×10⁻⁶ bis 200×10⁻⁶ m.

Die Reaktionstemperaturen liegen im Bereich von -10 bis +80 °C, vorzugsweise 0 bis 50 °C. Die erforderliche Reaktionszeit hängt von dem Angebot an Ozon und dem gewählten Reaktortyp ab und beträgt im allgemeinen 1 Minute bis 2 Stunden, vorzugsweise 5 bis 90 Minuten und insbesondere 5 bis 60 Minuten. Allerdings ist es auch möglich, bei einer Optimierung der Reaktionsbedingungen auf Zeiten unter einer Minute zu kommen.

Die Oxidation gemäß der Erfindung wird in einem ozonhaltigen Gasstrom durchgeführt, in dem das Ozon im allgemeinen in einer Konzentration von 0,1 bis 9 Vol.-%, vorzugsweise 2 bis 6 Vol.-% enthalten ist. Als Trägergas für das Ozon sind Sauerstoff oder Inertgase, wie Stickstoff oder auch Gemische aus diesen geeignet. Ebenfalls kann getrocknete Luft bei der Erzeugung des Ozons eingesetzt werden. Das Ozon wird im allgemeinen durch in der Technik bekannte Methoden, z.B. durch stille elektrische Entladung, erzeugt.

Die Reaktion wird in einem temperierbaren, für Begasungsreaktionen geeigneten Reaktionsgefäß durchgeführt. Dies kann beispielsweise ein begaster Rührkessel oder eine Blasensäule sein.

Als Suspensionsmedien sind alle unter den Reaktionsbedingungen als inert geltende flüssige Verbindungen geeignet, z.B. Wasser, niedere aliphatische Alkohole und Carbonsäuren mit jeweils 1-6, vorzugsweise 1-3 C-Atomen in der Alkylgruppe, die Ester aus den beiden vorgenannten Verbindungsklassen, Kohlenwasserstoffe mit 1-12 C-Atomen, die mit Chlor oder Fluor halogeniert sein können und Gemische aus den genannten Verbindungen. Auch Mineralsäuren sind geeignet, z.B. konzentrierte Schwefelsäure. In protischen Lösungsmitteln oder protische Lösungsmittel enthaltenden Lösungsmittelgemischen kann der Zusatz einer Mineralsäure, z.B. Schwefelsäure, von Vorteil sein.

Beispielsweise wird in Methylenchlorid in kurzer Zeit eine vollständige Oxidation zum Sulfoxid erreicht. Dagegen wird bei Einsatz von niederen aliphatischen Carbonsäuren mit einem Zusatz einer Mineralsäure nur eine teilweise Oxidation erzielt, da die Aufnahmegeschwindigkeit des Ozons bei Erreichen eines Schwefel/Sauerstoffverhältnisses von 1:0,5 deutlich absinkt. Es ist zwar möglich, auch hier eine vollständige Oxidation zu erreichen, jedoch sind dafür unwirtschaftlich lange Reaktionszeiten nötig.

Das Suspensionsmedium löst im allgemeinen keine oder nur sehr geringe Mengen des Polymeren, es fungiert jedoch als Wärme- und Ozonüberträger und hat steuernden Einfluß auf die Selektivität. Die Reaktion kann zwar auch in nicht flüssiger Phase durchgeführt werden, jedoch muß dann für eine lebhafte Durchmischung des Polymerpulvers gesorgt werden, da sonst an der Stelle des Ozoneintrags eine lokale Überhitzung (hot-spot) stattfinden kann, welche sich negativ auf die Oxidationsselektivität auswirkt.

Die gemäß der Erfindung erhaltenen Verbindungen lassen sich entweder thermoplastisch verarbeiten oder können beispielsweise durch gängige Sinterverfahren weiterverarbeitet werden, jedoch ist dies abhängig von deren Schmelzpunkten. Die erste Gruppe kann durch die für Thermoplaste gängigen Verarbeitungsmethoden, z. B. Spritzguß oder Extrusion, in Form- und Funktionsteile übergeführt werden. Die Formmassen können auch bekannte pulverförmige Füllstoffe, wie Kreide, Talk, Ton, Glimmer, und/oder faserförmige Verstärkungsmittel, wie Glas- und Kohlenstoffasern, Whiskers, sowie weitere übliche Zusatzstoffe und Verarbeitungshilfsmittel, z.B. Gleitmittel, Trennmittel, Antioxidantien, UV-Stabilisatoren, enthalten. Verwendung finden derartige Teile als hochbeanspruchbare Funktionsbauteile, beispielsweise im Flugzeug- und Automobilbau sowie im chemischen Apparatebau.

Die zweite Gruppe, d.h. die durch Sinterverfahren verarbeitbaren Polymere, findet Verwendung bei Funktionsteilen mit einer hohen Temperatur- und Chemikalienbelastung.

In den Beispielen bedeutet Tg die Glasumwandlungstemperatur, Tm ist der Schmelzpunkt.

### Beispiele

### 1) Polyphenylensulfoxid (PPSO)

In einem Reaktionsgefäß mit Scheibenrührer wurden 54,1 g eines Polyphenylensulfid-(PPS)-Pulvers (MW 40 000) mit einem mittleren Partikeldurchmesser von 20 x 10⁻⁶ m, in 400 ml Methylenchlorid suspendiert. In die Suspension wurde bei Temperaturen von -5 bis -7°C Ozon-haltiges Gas eingeleitet bis 0,5 Mol Ozon aufgenommen waren (72 Minuten). Die Ozonkonzentration betrug während der Begasung 51 bis 115 Gramm pro Kubikmeter Trägergas. Nach der Reaktion wurde das Polymerpulver abgesaugt und getrocknet. Im Infrarotspektrum konnte nur die ausschließliche Bildung von Sulfoxid-Gruppen beobachtet werden. Tg: 240°C, Tm: ≥370°C (Zersetzung).

| Elementaranalyse: C₆H₄SO | | | |
|---|---|---|---|
| C 58,04 | H 3,25 | S 25,82 | O 12,89 (ber.) |
| C 58,3 | H 3,5 | S 25,45 | O 12,75 (gef.) |

Das Schwefel/Sauerstoff-Verhältnis des erhaltenen Polymers betrug 1:1.

### 2. Polyphenylensulfidsulfoxid (PPS/SO)

In einer temperierbaren Blasensäule (5 cm Durchmesser, 120 cm Länge) wurden 216 g eines PPS-Pulvers wie in Beispiel 1 in einer Mischung aus 850 ml Eisessig und 8,5 ml Schwefelsäure suspendiert. Bei 10 bis 20°C wurde die Suspension über eine Glasfritte mit einem Ozon-haltigen Gasstrom (Strömungsgeschwindigkeit 180-200 l/h) mit einer Konzentration von 50 bis 100 Gramm Ozon pro Kubikmeter Gas begast. Nach 80 Minuten wurde die Reaktion nach Aufnahme von 48 g Ozon abgebrochen, weil sich zu diesem Zeitpunkt ein deutlicher Abfall der Reaktionsgeschwindigkeit abzeichnete. Anschließend wurde das Polymerpulver abfiltriert, mehrmals mit kleinen Mengen Wasser gewaschen und dann bei 30 mbar und 50 - 100°C getrocknet.
Im IR-Spektrum sind nur Sulfoxid-Gruppen zu erkennen.
Das Schwefel/Sauerstoff-Verhältnis bei dem erhaltenen Polymer betrug 1:0,51.

## Patentansprüche

1. Verfahren zur Herstellung eines Oxidationsproduktes aus Polyarylensulfid mit der wiederkehrenden Einheit der Formel 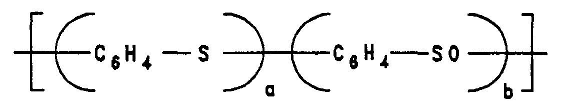 in der das Schwefel / Sauerstoffverhältnis 1 : 0,1 bis 1 : 1 beträgt und die Summe von a und b stets 1 ist mit der Maßgabe, daß a=0 ist, wenn b=1 ist, durch Oxidation von Polyarylensulfid mit einem mittleren Molekulargewicht zwischen 4.000 und 200.000 mit wiederkehrenden Einheiten der Formel 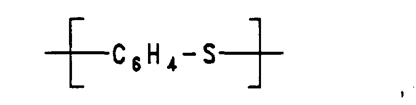 das ein 1,4-verknüpftes Polyarylensulfid mit einem Anteil von maximal 30% 1,2- und /oder 1,3- Verknüpfungen am aromatischen Kern ist, wobei die Oxidation durch Ozon bewirkt wird.

2. Verfahren gemäß Anspruch 1, wobei die Reaktion bei einer Temperatur zwischen -10 °C und + 80 °C durchgeführt wird.

3. Verfahren gemäß Anspruch 1 oder 2, wobei die Reaktion in einem ozonhaltigen Gasstrom mit einer Konzentration von 0,1 Vol.-% bis 9 Vol.-% Ozon durchgeführt wird.

4. Verfahren gemäß einem oder mehreren der Ansprüche 1 bis 3, wobei die Reaktion in einer Suspension durchgeführt wird.

5. Verfahren gemäß einem oder mehreren der Ansprüche 1 bis 4, wobei die Reaktionszeit mindestens eine Minute, höchstens 2 Stunden beträgt.

## Claims

1. A process for preparing an oxidation product of polyarylene sulfide comprising the recurring unit of the formula 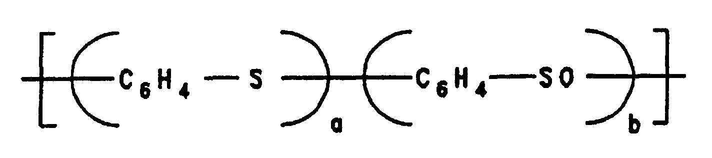 in which the sulfur/oxygen ratio is from 1:0.1 to 1:1 and the sum of a and b is always 1, with the proviso that a is zero if b is 1,
by oxidation of polyarylene sulfide having a mean molecular weight of from 4 000 to 200 000 and comprising recurring units of the formula 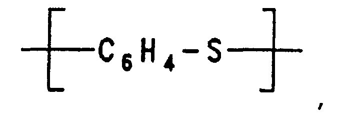 which is a 1,4-linked polyarylene sulfide having a proportion of not more than 30% 1,2- and/or 1,3-linkages on the aromatic ring, wherein the oxidation is effected by means of ozone.

2. The process as claimed in claim 1, wherein the reaction is carried out at a temperature of from -10°C to +80°C.

3. The process as claimed in claim 1 or 2, wherein the reaction is carried out in an ozone-containing gas stream having a concentration of from 0.1% by volume to 9% by volume of ozone.

4. The process as claimed in one or more of claims 1 to 3, wherein the reaction is carried out in a suspension.

5. The process as claimed in one or more of claims 1 to 4, wherein the reaction time is at least one minute and not more than 2 hours.

## Revendications

1. Procédé pour la préparation d'un produit d'oxydation à base de poly(sulfure d'arylène) comportant le motif répétitif de formule 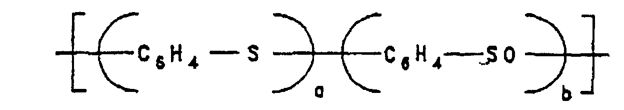 dans laquelle le rapport soufre/oxygène va de 1:0,1 à 1:1 et la somme de a et b est toujours égale à 1, étant entendu que a = 0 lorsque b = 1,
par oxydation de poly(sulfure d'arylène) ayant une masse moléculaire moyenne comprise entre 4 000 et 200 000, comportant des motifs répétitifs de formule 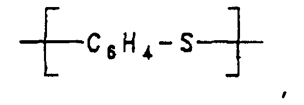 qui est un poly(sulfure d'arylène) en liaison 1,4 avec une proportion d'au maximum 30 % de liaisons 1,2 et/ou 1,3 sur le noyau aromatique, l'oxydation étant provoquée par l'ozone.

2. Procédé selon la revendication 1, dans lequel la réaction est effectuée à une température comprise entre -10°C et +80°C.

3. Procédé selon la revendication 1 ou 2, dans lequel la réaction est effectuée dans un courant de gaz contenant de l'ozone, ayant une teneur en ozone de 0,1 % en volume à 9 % en volume.

4. Procédé selon une ou plusieurs des revendications 1 à 3, dans lequel la réaction est effectuée dans une suspension.

5. Procédé selon une ou plusieurs des revendications 1 à 4, dans lequel la durée de la réaction est d'au moins une minute, au maximum de 2 heures.
